# EUROPEAN PATENT APPLICATION

(11) **EP 4 660 409 A1**
(43) Date of publication of application: **10.12.2025**
(21) Application number: 25180057.9
(22) Date of filing: 02.06.2025
(51) Int. Cl.: E06B 1/00, E06B 1/52, E06B 3/96

(54) **WIRE MANAGEMENT FOR FENESTRATION SYSTEM FRAME PROFILES**

(30) Priority: 05.06.2024 US 202463656183 P
(71) Applicant: Arconic Technologies LLC, Pittsburgh, PA 15212-5858 (US)
(72) Inventor: BARBULESCU, Ion-Horatiu, Marietta, 30062 (US); SATO, Lester Taku, Liverpool, L18 9US (GB); O'CONNELL, Craig, Manchester, M34 5YT (GB); AVILA, Jean, 34160 Restinclieres (FR)
(74) Representative: Keil & Schaafhausen Patentanwälte PartGmbB

(57) **Abstract**

A frame profile for a fenestration system includes a vertical member, a horizontal member joined to the vertical member at a corner joint, an outer profile cooperatively defined by the vertical and horizontal members and configured to accommodate a wire extending along the outer profile and transitioning between the vertical and horizontal members at the corner joint, and a corner clip mounted to the outer profile at the corner joint and operable to transition the wire between the vertical and horizontal members.

## Description

### BACKGROUND

Recent advances in technology have spurred interest in applying functionality to everyday objects that have historically been passive, thus spawning a new generation of "smart" or "active" systems. The commercial and residential fenestration industry, which includes the manufacture, installation, and arrangement of doors, windows, curtain wall systems, etc., is no different. For example, technological advances have recently fostered ideas such as the motorization and automation of doors and windows, electrochromic glass, integration of sensors (e.g., closed loop feedback for CO₂ and oxygen levels within a building environment, window and door status, etc.), enhanced security and monitoring options, real-time status checks on a building envelope, etc. Moreover, many fenestration systems include devices that require or generate electricity and, therefore, include attendant wiring to and from associated circuits inside and/or outside the building. Examples of such devices include signage, power-generating devices (e.g., solar panels, power generating windmills, sunshades, etc.), lighting devices, automation actuators, and surveillance and communication devices (e.g., antennas).

With the growth in smart and active systems, requirements for wiring or cable routing and electrical connections between profiles of fenestration system doors and windows will only increase. At a basic level, conventional aluminum profiles for doors and windows lend themselves to cable routing with large voids running along the length of the profile where there is ample space for cables to be routed. Wiring on, in, or through fenestration system profiles, however, presents various challenges. For example, fenestration system wiring conventionally requires drilling through structural members, which can weaken the frame profile and adversely impact weather intrusion resistance. Moreover, the wiring is unsightly and it is difficult to route wiring through the interior hollows of doors and windows, as this typically requires pushing or pulling wire through elongated hidden channels that often have constrictions and hidden obstacles. Furthermore, once a wired device is installed and the wiring is properly run, it is often difficult to trace a specific wire to remove or replace it.

### SUMMARY OF THE DISCLOSURE

Various details of the present disclosure are hereinafter summarized to provide a basic understanding. This summary is not an extensive overview of the disclosure and is neither intended to identify certain elements of the disclosure, nor to delineate the scope thereof. Rather, the primary purpose of this summary is to present some concepts of the disclosure in a simplified form prior to the more detailed description that is presented hereinafter.

Embodiments disclosed herein include a frame profile for a fenestration system, which includes a vertical member, a horizontal member joined to the vertical member at a corner joint, an outer profile cooperatively defined by the vertical and horizontal members and configured to accommodate a wire extending along the outer profile and transitioning between the vertical and horizontal members at the corner joint, and a corner clip mounted to the outer profile at the corner joint and operable to transition the wire between the vertical and horizontal members. In a further embodiment, the corner clip comprises an L-shaped body providing a first extension and a second extension extending from the first extension at a joint, a wire channel defined on an inner surface of each extension and contiguously transitioning between the first and second extensions at the joint, wherein the wire channel is sized to receive and transition the wire between the vertical and horizontal members. In another further embodiment, the wire channel exhibits a depth greater than a diameter of the wire. In another further embodiment, the corner clip further comprises one or more longitudinal ribs defined on an outer surface of each extension, the frame profile further including a frame gasket operatively coupled to the outer profile and defining one or more longitudinal ribs that align with the one or more longitudinal ribs of the corner clip when the corner clip is mounted to the outer profile. In another further embodiment, the wire channel is defined by a pair of legs extending parallel to each other, and wherein the corner clip is mounted to the outer profile by receiving the pair of legs in a channel defined in the outer profile. In another further embodiment, at least one leg of the pair of legs provides a matable feature operable to mate with a corresponding matable feature provided within the channel. In another further embodiment, the wire is received within a channel defined in the outer profile. In another further embodiment, the outer profile is cooperatively defined by a vertical outer side extending between interior and exterior portions of the vertical member, and a horizontal outer side extending between interior and exterior portions of the horizontal member, and wherein the channel is defined in the vertical and horizontal outer sides. In another further embodiment, the frame profile further includes a frame accessory operatively coupled to the outer profile, wherein the channel is at least partially defined in the frame accessory. In another further embodiment, the wire is secured within the channel using a wire clip. In another further embodiment, the wire clip comprises a body providing opposing first and second legs that cooperatively define a wire retention passage sized to receive the wire, and a retention mechanism provided on each leg and matable with a corresponding retention mechanism provided within the channel. In another further embodiment, the wire retention passage exhibits a diameter smaller than a diameter of the wire. In another further embodiment, the wire clip is made of rubber or a foam rubber. In another further embodiment, each leg of the wire clip defines a chamfered surface that helps facilitate installation of the wire clip in the channel. In another further embodiment, the frame profile further includes a frame gasket attached to the outer profile at a gasket profile contiguous with the channel, wherein the frame gasket contacts or comes into close contact with the wire when received in the gasket profile. In another further embodiment, the frame profile further includes a frame gasket attached to the outer profile at a gasket profile contiguous with the channel, wherein the frame gasket includes a wire retention passage sized to receive the wire.

Embodiments disclosed herein may further include a frame profile for a fenestration system, comprising a first member extending from a second member at a corner joint, an outer profile cooperatively defined by the first and second members configured to accommodate a wire extending along the outer profile and transitioning between the first and second members at the corner joint, the wire being received within a channel defined in the outer profile, a corner clip mounted to the outer profile at the corner joint and operable to transition the wire between the first and second members, and one or more wire clips arranged within the channel, wherein the wire is received within the one or more wire clips to secure the wire within the channel. In a further embodiment, the corner clip comprises an L-shaped body providing a first extension and a second extension extending from the first extension at a joint, and a wire channel defined on an inner surface of each extension and contiguously transitioning between the first and second extensions at the joint, wherein the wire channel is sized to receive and transition the wire between the first and second members. In another further embodiment, the wire clip comprises a body providing opposing first and second legs that cooperatively define a wire retention passage sized to receive the wire, and a retention mechanism provided on each leg and matable with a corresponding retention mechanism provided within the channel. In another further embodiment, the frame profile further includes a frame gasket attached to the outer profile at a gasket profile contiguous with the channel, wherein the frame gasket contacts or comes into close contact with the wire when received in the gasket profile.

### BRIEF DESCRIPTION OF THE DRAWINGS

The following figures are included to illustrate certain aspects of the present disclosure, and should not be viewed as exclusive embodiments. The subject matter disclosed is capable of considerable modifications, alterations, combinations, and equivalents in form and function, without departing from the scope of this disclosure.
FIGS. 1A and 1B are left and right isometric views, respectively of a portion of an example fenestration system that may incorporate the principles of the present disclosure.
FIGS. 2A and 2B are front and back isometric views, respectively, of one example of the corner clip of FIGS. 1A-1B, according to one or more embodiments.
FIG. 3 is an isometric view of the frame profile of FIGS. 1A-1B, according to one or more additional embodiments.
FIG. 4 is an isometric view of the corner clip of FIG. 3, according to one or more embodiments.
FIG. 5A is a cross-sectional view of a portion of the frame profile, according to one or more additional embodiments.
FIG. 5B is an enlarged view of the frame profile, as indicated by the dashed box in FIG. 5A.
FIG. 6 is an isometric view of another example wire clip that may be used in accordance with the embodiments of the present disclosure.
FIG. 7 is an isometric view of another example wire clip that may be used in accordance with the embodiments of the present disclosure.
FIG. 8 is an isometric view of another example wire clip that may be used in accordance with the embodiments of the present disclosure.
FIG. 9 is a schematic diagram showing progressive steps in installing the wire clip of FIG. 8, according to one or more embodiments.
FIG. 10A is a cross-sectional view of a portion of the frame profile, according to one or more additional embodiments.
FIG. 10B is an isometric view of the frame gasket of FIG. 10A, according to one or more embodiments.

### DETAILED DESCRIPTION

The present disclosure is related to building products and, more particularly, to window structures, window frames, curtain walls, and curtain wall assemblies that incorporate a shear block designed to facilitate easy wiring at the joints between horizontal and vertical structural members.

Embodiments discussed herein generally related to wire management in door or window frames and, more particularly, to routing wires around the corner of a frame profile using a specially-designed corner clip. Installing the presently disclosed corner clips allow an easy transition of wiring from one direction to another direction. Moreover, the corner clips described herein make it possible to install the wires after the frame profile is rolled/assembled, and facilitates easy access to the bend/corner of the wire for potential maintenance, repairs, etc. The designs provided herein also seamlessly conceals the wire at the door corner, and allow for transitional wire relief at the corner, and thus avoiding damage to the wire.

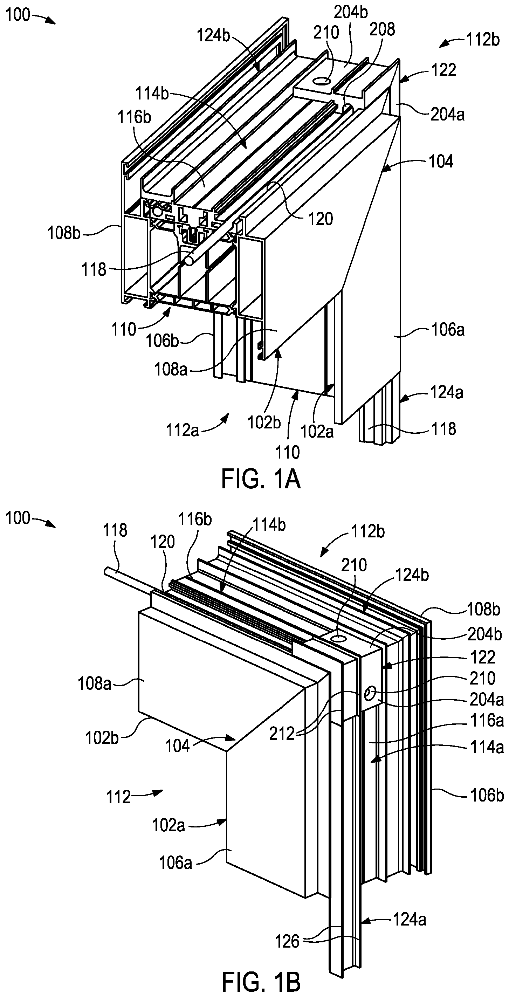

FIGS. 1A and 1B are left and right isometric views, respectively of a portion of an example frame profile 100 for a fenestration system that may incorporate the principles of the present disclosure. The frame profile 100 may be associated with a variety of fenestration systems such as, but not limited to, doors, windows, curtain wall assemblies, conservatories, balconies, glazed roofing systems, sliding doors or windows, storefront systems, or any combination thereof. In the illustrated embodiment, the frame profile 100 is associated with a door, but could alternatively be associated with any of the aforementioned fenestration systems without departing from the scope of the disclosure. Moreover, the frame profile 100 may be implemented in a commercial or residential building setting.

The illustrated portion of the frame profile 100 includes a first or "vertical" member 102a and a second or "horizontal" member 102b joined to the vertical member 102a at a corner joint 104. In some applications, the vertical member 102a may alternatively be referred to as a "stile" or "mullion" and the horizontal member 102b may alternatively be referred to as a "rail". The vertical member 102a includes an interior portion 106a generally exposed to the interior of the building, and an opposing exterior portion 106b generally exposed to the exterior of the building. Similarly, the horizontal member 102b includes an interior portion 108a generally exposed the interior of the building and an exterior portion 108b generally exposed to the exterior of the building.

In some embodiments, the interior and exterior portions 106a,b, 108a,b may be coupled to form the vertical and horizontal members 102a,b, respectively. Alternatively, the interior and exterior portions 106a,b, 108a,b may be integrally formed in corresponding one-piece manufactured parts. In yet other embodiments, as illustrated, the interior and exterior portions 106a,b, 108a,b may be operatively coupled to each other with a thermal break 110 (FIG. 1A) that extends laterally therebetween and otherwise interposes the interior and exterior portions 106a,b, 108a,b. The thermal break 110 may be made of a material having low thermal conductivity, such as a polymer (e.g., a polyamide), thereby reducing thermal energy transfer between the interior and exterior portions 106a,b, 108a,b.

The frame profile 100 includes and otherwise defines an inner profile 112a sized to receive a component of the fenestration system, such as glass, a glazing, an infill, etc., and an outer profile 112b configured to be received within a framed structure secured within an aperture formed in the building. As illustrated, the outer profile 112b may be cooperatively defined by a vertical outer side 114a of the vertical member 102a, which extends between the interior and exterior portions 106a,b, and a horizontal outer side 114b of the horizontal member 102b, which extends between the interior and exterior portions 108a,b.

The vertical and horizontal outer sides 114a,b may generally provide a surface for operatively coupling various features of the fenestration system, such as gaskets, seals, wiring, etc. In some embodiments, the outer sides 114a,b may comprise interconnected portions of the thermal break 110 and the vertical and horizontal members 102a,b. In other embodiments, however, the outer profile 112b may include or comprise a frame accessory operatively coupled to the thermal break 110 and arranged between the interior and exterior portions 106a,b, 108a,b. In the illustrated embodiment a first frame accessory 116a (FIG. 1B) is mounted to the frame profile 110 and extends between the interior and exterior portions 106a,b of the vertical member 102a, and a second frame accessory 116b is mounted to the frame profile 110 and extends between the interior and exterior portions 108a,b of the horizontal member 102b. In embodiments including the frame accessories 116a,b, features of the fenestration system, such as gaskets, seals, wiring, etc. may be operatively coupled to the frame profile 110 at the frame accessories 116a,b.

In the illustrated embodiment, a wire 118 extends along and is operatively coupled to the outer profile 112b, and the wire 118 transitions between the vertical and horizontal members 102a,b at the corner joint 104. In some embodiments, as illustrated, the wire 118 may be received within a channel 120 defined in the outer profile 112b (the channel 120 is occluded in the vertical member 102a and is only visible in the horizontal member 102b). The channel 120 may be defined in the vertical and horizontal outer sides 114a,b, and in such embodiments, the channel 120 may be provided in either the interior or exterior portion 106a,b, 108a,b. In embodiments that include the frame accessories 116a,b, however, the channel 120 may be defined (at least partially) in the frame accessories 116a,b. The channel 120 may be the be coupled to form the vertical and horizontal members 102a,b,

In some applications, the corner joint 104 forms a 90° angle, and the wire 118 must be routed (transitioned) around the corner joint 104 on the outer profile 112b between the vertical and horizontal members 102a,b. In some installations, the wire 118 may exhibit a diameter that makes the wire 118 stiff and difficult to navigate the 90° angle transition without damaging or breaking the wire 118. Wires used to power electrochromic glass, for example, generally have a diameter of about 6 mm, thus resulting in a fairly stiff wire that makes it difficult to transition around the corner joint 104.

According to embodiments of the present disclosure, the frame profile 100 may further include a corner clip 122 mounted to the outer profile 112b at the corner joint 104. As described herein, the corner clip 122 may be operable to help transition the wire 118 between the vertical and horizontal members 102a,b, and may further exhibit transitional wire relief that protects the wire 118.

While the wire 118 is shown routed (transitioned) around the corner joint 104 on the outer profile 112b between the vertical and horizontal members 102a,b, it is also contemplated herein that the wire 118 may be routed around the corner joint 104 on the inner profile 112a and between the vertical and horizontal members 102a,b, without departing from the scope of the disclosure. In such embodiments, the corner clip 122 may be mounted to the inner profile 112a and may help transition the wire 118 between the vertical and horizontal members 102a,b.

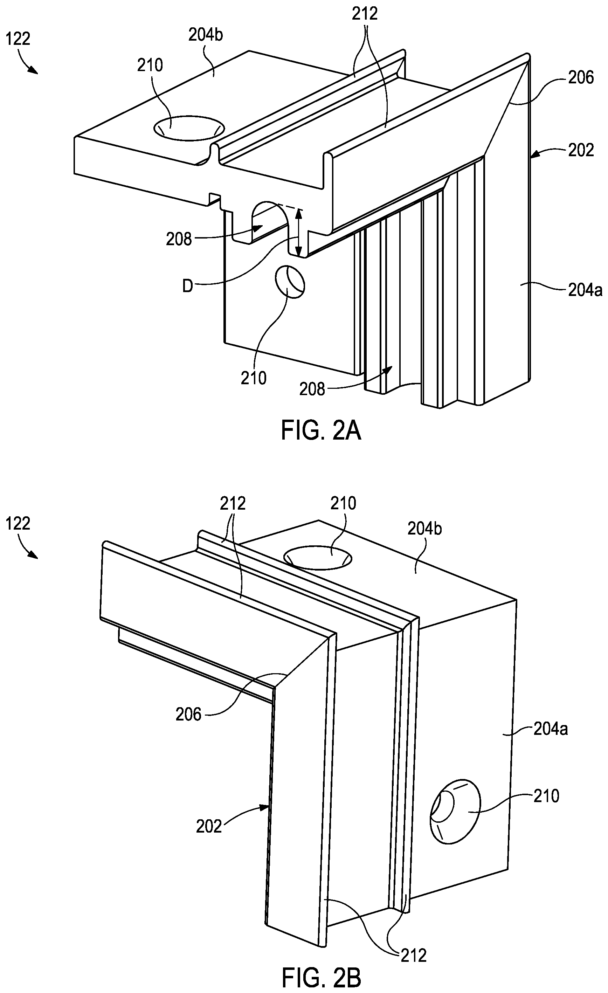

FIGS. 2A and 2B are front and back isometric views, respectively, of one example of the corner clip 122, according to one or more embodiments of the present disclosure. As illustrated, the corner clip 122 provides a generally L-shaped body 202 that provides a first extension 204a and a second extension 204b extending from the first extension 204a at a generally 90° angle. The first and second extensions 204a,b meet at a joint 206 where the first and second extensions 204a,b may be secured to each other, such as via laser welding, an adhesive, or the like. In other embodiments, however, the first and second extensions 204a,b may be integrally formed, such as via an additive manufacturing method or 3D printing. The corner clip 122 may be made of a rigid or semi-rigid material, such as a metal (e.g., stainless steel, aluminum, etc.), a plastic, rubber, a composite material, wood, or any combination thereof. In at least one embodiment, the corner clip 122 may be made of a nonconductive material.

As best seen in FIG. 2A, a wire channel 208 may be defined on corresponding inner surfaces of each extension 204a,b. The wire channel 208 may contiguously transition between each extension 204a,b at the joint 206. In some embodiments, the transition of the wire channel 208 between the extensions 204a,b may form a 90° angle, but could alternatively be curved or arcuate, without departing from the scope of the disclosure. The wire channel 208 may be sized and otherwise configured to receive the wire 118 (FIGS. 1A-1B), thereby allowing the wire 118 to transition between the vertical and horizontal members 102a,b (FIGS. 1A-1B).

As illustrated, the wire channel 208 may exhibit a depth D. In some embodiments, the depth D may be greater than the diameter of the wire 118. In at least one embodiment, for example, the depth D may be at least twice the diameter of the wire 118. The depth D of the wire channel 208 may help facilitate transitional relief at the bend of the wire 118 as it transitions between the vertical and horizontal members 102a,b. In at least one embodiment, depth D could vary in size at the joint 206. For example, the depth D of the wire channel 208 away from the joint 206 could sized to receive and secure (e.g., hold tight) the wire 118. At or near the joint 206, however, the depth D may increase to allow for relief in the bend of the wire 118.

In some embodiments, as illustrated, the corner clip 122 may define one or more apertures 210 for securing the corner clip 122 to the frame profile 100 (FIGS. 1A-1B). In the illustrated embodiment, an aperture 210 is defined on each extension 204a,b, and each aperture 210 may be sized to receive a corresponding mechanical fastener (e.g., a screw) to secure the corner clip 122 to the frame profile 100. In other embodiments, however, the corner clip 122 may provide more than two apertures 210, without departing from the scope of the disclosure.

In some embodiments, the corner clip 122 may define one or more longitudinal ribs 212 extending on an outer surface of each extension 204a,b. The ribs 212 of each extension 204a,b meet at the joint 206. As described in more detail below, the longitudinal ribs 212 may be configured to align with longitudinal ribs provided on adjacent gaskets mounted to the frame profile 100 (FIGS. 1A-1B). Moreover, in some applications, the longitudinal ribs 212 may prove advantageous in improving thermal performance by dividing internal cavities of the frame profile 100 into multiple, separated, cavities.

Referring again to FIGS. 1A-1B, the corner clip 122 is shown mounted to the outer profile 112b at the corner joint 104, where the first extension 204a rests against the vertical member 102a and the second extension 204b rests against the horizontal member 102b. In the illustrated embodiment, the first and second extensions 204a,b rest against the vertical and horizontal outer sides 114a,b, respectively, and, more particularly, against portions of the first and second frame accessories 116a,b and the interior portions 106a, 108b, respectively. Moreover, as best seen in FIG. 1A, the wire 118 can be at least partially received within the wire channel 208. Once properly fitted to the outer profile 112, the corner clip 122 may be fastened to the frame profile 110 by extending one or more mechanical fasteners (not shown) through the apertures 210 defined in the corner clip 122. As indicated above, however, the wire 118 may alternatively be routed around the corner joint 104 on the inner profile 112a, and the corner clip 122 may alternatively be mounted to the inner profile 112a to help transition the wire 118 between the vertical and horizontal members 102a,b.

In some embodiments, as illustrated, the frame profile 100 may include one or more frame gaskets, shown as first and second frame gaskets 124a and 124b. The frame gaskets 124a,b may be operatively coupled to the outer profile 112b, and may include corresponding vertical and horizontal portions. In the illustrated embodiment, the vertical and horizontal portions of the second frame gasket 124b meet at the corner joint 104. In contrast, the corner clip 122 interposes vertical and horizontal portions of the first frame gasket 124a; to enable viewing of the wire 118 received within the channel 120, the horizontal portion of the first frame gasket 124a is omitted in FIGS. 1A-1B, but would otherwise be included and covering the wire 118 along the horizontal outer side 114b.

As best seen in FIG. 1B, the vertical portion of the first frame gasket 124a includes one or more longitudinal ribs 126 (two shown). Upon mounting the corner clip 122 to the frame profile 110 at the corner joint 104, the longitudinal ribs 212 of the corner clip 122 may be configured to align with the longitudinal ribs 126 of the first frame gasket 124a. Accordingly, the exterior design of the corner clip 122 may be configured to integrate seamlessly with the first frame gasket 124a and thereby provide a continuous profile with the first frame gasket 124a along the outer profile 112b of the frame profile 110. In at least some applications, proper alignment of the longitudinal ribs 126, 212 may help enhance thermal performance.

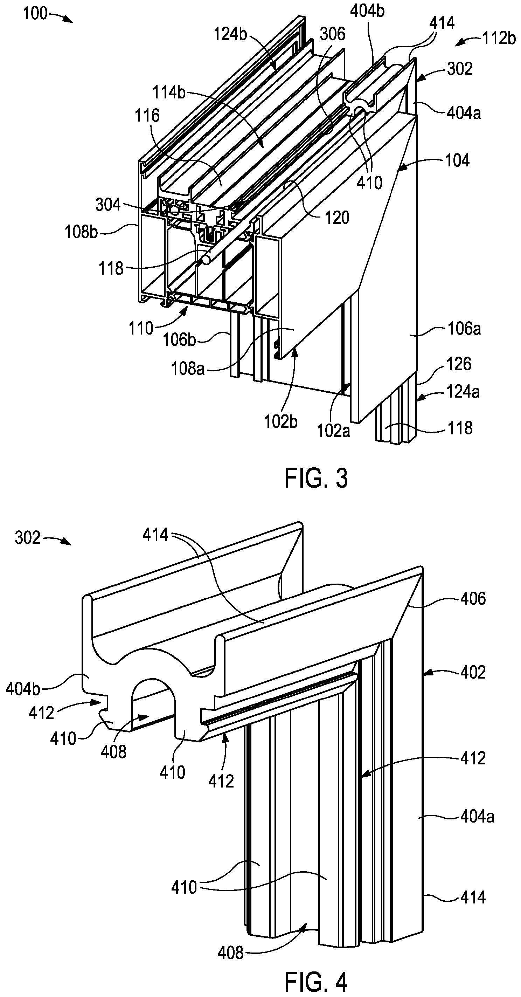

FIG. 3 is an isometric view of the frame profile 100 according to one or more additional embodiments. As discussed above, the frame profile 100 includes the vertical and horizontal members 102a,b joined at the corner joint 104, where the vertical member 102a includes the interior and exterior portions 106a,b, and the horizontal member 102b includes the interior and exterior portions 108a,b. In the illustrated embodiment, the interior and exterior portions 106a,b, 108a,b are operatively coupled to each other with the thermal break 110, which extends laterally therebetween. Moreover, in the illustrated embodiment, a frame accessory 116 (e.g., the second frame accessory of FIGS. 1A-1B) is mounted to the frame profile 110 and extends between the interior and exterior portions 108a,b of the horizontal member 102b. The wire 118 extends along the outer profile 112b of the frame profile 110 and transitions between the vertical and horizontal members 102a,b at the corner joint 104. In the illustrated embodiment, the wire 118 is received within the channel 120, which is (at least partially) defined in the frame accessory 116.

Similar to the embodiment of FIGS. 1A-1B, the frame profile 100 further includes a corner clip 302 mounted to the outer profile 112b at the corner joint 104. And similar to the corner clip 122 of FIGS. 1A-1B, 2A-2B, the corner clip 302 helps to transition the wire 118 between the vertical and horizontal members 102a,b, and exhibits transitional wire relief that protects the wire 118.

FIG. 4 is an isometric view of the corner clip 302, according to one or more embodiments. As illustrated, the corner clip 302 provides a generally L-shaped body 402 that provides a first extension 404a and a second extension 404b extending from the first extension 404a at a generally 90° angle. The first and second extensions 404a,b meet at a joint 406 where the first and second extensions 404a,b may be secured to each other, such as via laser welding, an adhesive, or the like. In some embodiments, however, the first and second extensions 404a,b may be integrally formed, such as via 3D printing or the like. The corner clip 302 may be made of a rigid or semi-rigid material, such as a metal (e.g., stainless steel, aluminum, etc.), a plastic, rubber, a composite material, or any combination thereof. In at least one embodiment, the corner clip 302 may be made of a nonconductive material.

A wire channel 408 is defined on corresponding inner surfaces of each extension 404a,b, and contiguously transitions between each extension 404a,b at the joint 406. In some embodiments, the transition of the wire channel 408 between the extensions 404a,b may form a 90° angle, but could alternatively be curved or arcuate, without departing from the scope of the disclosure. The wire channel 408 is sized to receive the wire 118 (FIG. 3), thereby allowing the wire 118 to transition between the vertical and horizontal members 102a,b (FIG. 3). The wire channel 408 may be similar to the wire channel 208 of FIGS. 2A-2B and, therefore, will not be described in detail.

In some embodiments, as illustrated, the wire channel 408 may be defined by a pair of legs 410 extending parallel to each other. Each leg 410 may provide one or more matable features 412 defined on an exterior surface of the corresponding leg 410. In the illustrated embodiment, the matable features 412 comprise radial protrusions or the like that extend laterally outward from the corresponding leg 410. As discussed below, the matable features 412 may be configured to be received within and mate with corresponding matable features defined on the outer profile 112b (FIG. 3), and thereby secure the corner clip 302 to the frame profile 100.

In some embodiments, the corner clip 302 may further define one or more longitudinal ribs 414 extending on an outer surface of each extension 404a,b. The longitudinal ribs 414 meet at the joint 406 and may be configured to align with longitudinal ribs provided on adjacent gaskets mounted to the frame profile 100 (FIG. 3), as described in more detail below. Moreover, in some applications, the longitudinal ribs 414 may prove advantageous in improving thermal performance by dividing internal cavities of the frame profile 100 into multiple, separated, cavities.

Referring again to FIG. 3, the corner clip 302 is shown mounted to the outer profile 112b at the corner joint 104, where the first extension 404a rests against the vertical member 102a and the second extension 404b rests against the horizontal member 102b. In the illustrated embodiment, the first and second extensions 404a,b rest against the vertical and horizontal outer sides 114a,b (the vertical outer side 114a is occluded in FIG. 3), respectively, and, more particularly, against the frame accessories 116 (only the frame accessory 116 on the horizontal member 102b is visible) and the interior portions 106a, 108a. The wire 118 may be received within the channel 120 and at least partially within the wire channel 408 as it transitions between the vertical and horizontal portions 102a,b.

The corner clip 302 can be secured to the outer profile 112b by inserting (receiving) the legs 410 into a clip channel 304 defined in the outer profile 112b. In the illustrated embodiment, the clip channel 304 is at least partially defined in the frame accessory 116 and the interior portions 106a, 108a, and may define one or more corresponding matable features 306 configured to receive and mate with the matable features 412 (FIG. 4) defined on the legs 410 of the corner clip 302. In at least one embodiment, the matable features 306, 412 may form a secured interface via a snap-on or snap fit engagement, or the like. Moreover, in some embodiments, the corner clip 302 may be made of a flexible material, such as rubber (e.g., EPDM). In such embodiments, inserting the legs 410 into the clip channel 304 may cause the legs 410 to flex laterally inward to enable the matable features 412 to be received by and properly mate with the matable features 306 of the clip channel 304. As will be appreciated, the mated engagement between the matable extensions 306, 410 may take on a variety of designs or forms, without departing from the scope of the disclosure.

The frame profile 100 may further include the first and second frame gaskets 124a,b operatively coupled to the outer profile 112b. In the illustrated embodiment, vertical and horizontal portions of the second frame gasket 124b extend about the corner joint 104, but the corner clip 302 interposes vertical and horizontal portions of the first frame gasket 124a; to enable viewing of the wire 118 received within the channel 120, the horizontal portion of the first frame gasket 124a is omitted in FIG. 3, but would otherwise be included and covering the wire 118 along the horizontal outer side 114b. Upon mounting the corner clip 302 to the frame profile 110 at the corner joint 104, the longitudinal ribs 414 of the corner clip 302 may be configured to align with the longitudinal ribs 126 of the first frame gasket 124a. Accordingly, the exterior design of the corner clip 302 may be configured to integrate seamlessly with the first frame gasket 124a and thereby provide a continuous profile with the first frame gasket 124a along the outer profile 112b.

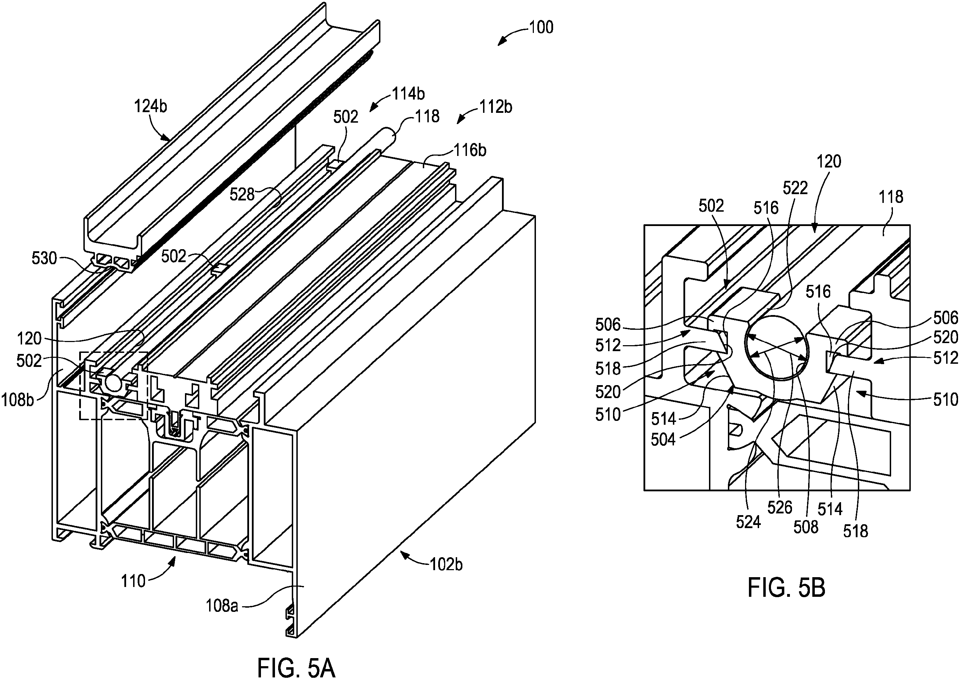

FIG. 5A is a cross-sectional view of a portion of the frame profile 100, according to one or more additional embodiments. In the illustrated embodiment, only the horizontal member 102b is shown, but the present discussion is equally applicable to the vertical member 102a, without departing from the scope of the disclosure. As illustrated, the wire 118 is received within the channel 120, which is defined in the outer profile 112b and, more specifically, within the horizontal outer side 114b. In the illustrated embodiment, the channel 120 is defined in a combination of the exterior portion 108b of the horizontal member 102b and a frame accessory (e.g., the second frame accessory 116b) arranged between the interior and exterior portions 108a,b and operatively coupled to the thermal break 110.

In some embodiments, as illustrated, the wire 118 may be secured within the channel 120 using one or more wire clips 502 (three visible), which may be spaced from each other along the channel 120. In some installations, the wire clips 502 may first be received within the channel 120, following which the wire 118 may be received within the wire clips 502, thereby securing the wire 118 longitudinally in place within the channel 120. In other installations, however, the wire 118 may first be received within the wire clips 502, following which the wire clips 502 may be received within the channel 120. The wire clips 502 may be made of a variety of rigid or semi-rigid materials including, but not limited to, a metal (e.g., stainless steel, aluminum, etc.), a plastic, rubber, a composite material, or any combination thereof.

FIG. 5B is an enlarged view of the frame profile 100, as indicated by the dashed box in FIG. 5A. As illustrated, the wire clip 502 provides a generally U-shaped body 504 that provides opposing first and second legs 506 that cooperatively define a wire retention passage 508 sized to receive and secure the wire 118. Each leg 506 may further provide a retention mechanism 510 configured to locate and mate with a corresponding retention mechanism 512 provided within the channel 120. In the illustrated embodiment, the retention mechanism 510 includes a tapered outer surface 514 provided on each leg 506, and each tapered outer surface transitions to a groove 516. The retention mechanism 512 provided within the channel 120 provides a lateral projection 518 sized to be received within the adjacent groove 516. Moreover, each lateral projection 518 defines a tapered outer surface 520 configured to slidably engage the tapered outer surface 514 of the adjacent leg 506.

Example installation of the wire clip 502 and the wire 118 will now be provided. A user may first advance the wire clip 502 into the channel 120 until the tapered outer surfaces 514 of each leg 506 locate and engage the corresponding tapered outer surfaces 520 provided on each lateral projection 518. Advancing the wire clip 502 further into the channel 120 will cause the tapered outer surfaces 514, 522 to slidably engage each other, thereby flexing the legs 506 laterally inward until the lateral projections 518 locate and are received within the adjacent grooves 516. Receiving the lateral projections 518 into the grooves 516 allows the legs 506 to flex back outward, thereby securing the wire clip 502 within the channel 120. The wire 118 may then be received within the wire retention passage 508.

In some embodiments, as illustrated, the wire retention passage 508 may exhibit an angular magnitude greater than 180°, thereby defining an opening 522 that exhibits an angular magnitude less than 180°. This may prove advantageous in helping to retain the wire 118 within the wire retention passage 508 once received therein. Moreover, in such embodiments, the wire 118 may exhibit a diameter 524 that is greater than the size of the opening 522. Consequently, forcing the wire 118 through the opening 522 will cause the legs 506 to flex laterally outward. In at least one embodiment, the wire retention passage 508 may exhibit a diameter 526 that is smaller than the diameter 524 of the wire 118. Consequently, once the wire 118 is received within the wire retention passage 508, the wire 118 may force the legs 506 laterally outward and further into engagement with the lateral projections 518. This generates tension or friction, which may prove advantageous in helping to prevent the wire clip 502 from sliding (translating) along the channel 120. This may prove particularly advantageous in vertical installations.

Referring again to FIG. 5A, once the wire 118 is properly received within the wire clips 502, a frame gasket (e.g., the second frame gasket 124b) may then be attached to the outer profile 112b. In the illustrated embodiment, the second frame gasket 124b may be attached to the outer profile 112b by advancing the second frame gasket 124b into a gasket profile 528 defined by the outer profile 112b. As illustrated, the gasket profile 528 may be contiguous with the channel 120, such that receiving the second frame gasket 124b into the gasket profile 528 causes the bottom of the second frame gasket 124b to contact (or come into close contact) with the wire 118. In at least one embodiment, the bottom of the second frame gasket 124b may define an arcuate or arched surface 530 configured to engage or cradle the outer surface of the wire 118. Accordingly, in some embodiments, the second frame gasket 124b may help facilitate a tight fit for the wire 118, and also provide extra space for the wire 118 when the second frame gasket 124b is installed.

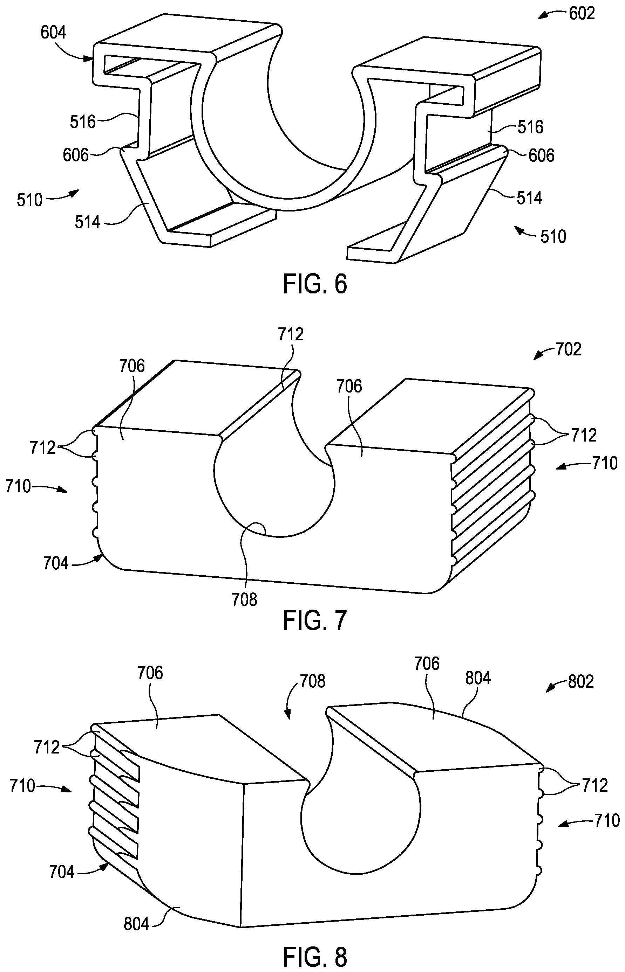

FIG. 6 is an isometric view of another example wire clip 602 that may be used in accordance with the embodiments of the present disclosure. The wire clip 602 may be similar in some respects to the wire clip 502 of FIGS. 5A-5B, and therefore may be best understood with reference thereto, where like numerals will correspond to like components. The wire clip 602 may replace the wire clip 502 in the frame profile 100 of FIG. 5A.

As illustrated, the wire clip 602 provides a generally U-shaped body 604 that provides opposing first and second legs 606 that cooperatively define a wire retention passage 608 sized to receive and secure the wire 118 (FIGS. 5A-5B). Each leg 606 may further provide the retention mechanism 510, which includes the tapered outer surface 514 that transitions to the groove 516. Unlike the wire clip 502 of FIGS. 5A-5B, however, which includes a solid body 504, the body 604 of the wire clip 602 comprises a wireframe structure. Moreover, in at least one embodiment, the body 604 may be made of a metal, such as spring steel, or the like. In such embodiments, the wire clip 602 may be preloaded (pre-tensioned) for insertion of the wire 118.

FIG. 7 is an isometric view of another example wire clip 702 that may be used in accordance with the embodiments of the present disclosure. The wire clip 702 may be similar in some respects to the wire clip 502 of FIGS. 5A-5B, and therefore may be best understood with reference thereto. In at least one embodiment, the wire clip 702 may replace the wire clip 502 in the frame profile 100 of FIG. 5A.

Similar to the wire clip 502 of FIGS. 5A-5B, the wire clip 702 provides a generally U-shaped body 704 that provides opposing first and second legs 706 that cooperatively define a wire retention passage 708 sized to receive and secure the wire 118 (FIGS. 5A-5B). Each leg 706 may further provide a retention mechanism 710 configured to locate and mate with a corresponding retention mechanism provided within the channel 120 (FIGS. 5A-5B). In the illustrated embodiment, the retention mechanism 710 includes a plurality of teeth or projections 712 extending laterally outward from the outer surface of each leg 706. In some embodiments, as illustrated, the projections 712 may be vertically spaced from each other and extend parallel to one another. The retention mechanism provided within the channel 120 may provide or otherwise define corresponding features or structures capable of receiving and securing the projections 712, thereby securing the wire clip 702 within the channel 120.

In some embodiments, the wire clip 702 may be made of a flexible material, such as rubber. In such embodiments, the rubber material may comprise, for example, ethylene propylene diene terpolymer (EPDM) or an EPDM foam. Making the wire clip 702 of a flexible material will allow the legs 706 to flex inward to be received within the channel 120 (FIGS. 5A-5B) and laterally outward to receive the wire 118 (FIGS. 5A-5B). Moreover, similar to the wire clip 502 of FIGS. 5A-5B, in some embodiments, the wire retention passage 708 may exhibit an angular magnitude greater than 180°, thereby defining an opening 712 that exhibits an angular magnitude less than 180°. This may prove advantageous in helping to retain the wire 118 (FIGS. 5A-5B) within the wire retention passage 708. Moreover, once the wire 118 is received within the wire retention passage 708, the wire 118 may force the legs 706 laterally outward and further into engagement with the adjacent retention mechanism provided within the channel 120 (FIGS. 5A-5B), thereby helping to prevent the wire clip 702 from sliding (translating) along the channel 120.

FIG. 8 is an isometric view of another example wire clip 802 that may be used in accordance with the embodiments of the present disclosure. The wire clip 802 may be similar in some respects to the wire clip 502 of FIGS. 5A-5B, and therefore may be best understood with reference thereto. In at least one embodiment, for example, the wire clip 802 may replace the wire clip 502 in the frame profile 100 of FIG. 5A.

The wire clip 802 may also be substantially similar to the wire clip 702 of FIG. 7. For example, similar the wire clip 702, the wire clip 802 includes the body 704, the legs 706, the wire retention passage 708, and the retention mechanisms 710, as generally described above. Unlike the wire clip 702, however, each leg 706 of the wire clip 802 includes an arcuate or chamfered surface 804. The chamfered surface 804 helps facilitate installation of the wire clip 802 in the channel 120 (FIGS. 5A-5B). In particular, wire clip 802 may be inserted widthwise into the channel 120, and once inserted, the wire clip 802 can be rotated until the legs 706 are fully received within a corresponding retention mechanism provided within the channel 120.

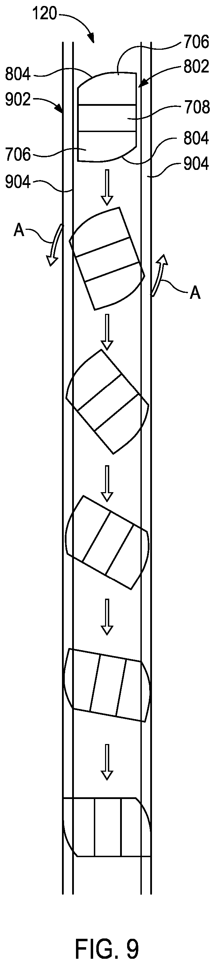

FIG. 9 is a schematic diagram showing progressive steps for installing the wire clip 802 in the channel 120, according to one or more embodiments. The channel 120 includes a retention mechanism 902 configured to receive and secure the wire clip 802 within the channel 120. In some embodiments, the retention mechanism 902 provides or defines teeth or projections 904 that extend laterally into the channel 120 and are capable of receiving and securing the projections 712 (FIG. 8) provided on the lateral sides of the legs 706. In other embodiments, however, the projections 904 may be configured to extend over the top surface of the wire clip 802 as the wire clip 802 is rotated within the channel 120.

As illustrated at the top of FIG. 9, the wire clip 802 may be inserted into the channel 120 widthwise, or in other words, with the wire retention passage 708 aligned substantially perpendicular to the longitudinal direction of the channel 120. Once the wire clip 802 is received within the channel, the wire clip 802 may be progressively rotated in the direction of the chamfered surfaces 804, as indicated by the arrows A. More specifically, the wire clip 802 may be rotated such that the chamfered surfaces 804 are rotated toward the opposing sidewalls of the channel 120. The chamfered surfaces 804 constitute sections or portions of the wire clip 802 that are removed, thereby enabling the wire clip 802 to rotate within the channel 120 without the legs 706 binding against the opposing lateral (inner) walls of the channel 120. The wire clip 802 may continue to be rotated in the angular direction until the wire retention passage 708 is substantially aligned in parallel with the longitudinal direction of the channel 120, as shown in the lowermost image of FIG. 9.

Because the wire clip 802 is designed to be rotated within the channel 120, instead of forced into the channel 120 where the legs 706 are flexed laterally inward or outward, the wire clip 802 may be made of a rigid material. In some embodiments, for example, the wire clip 802 may be made of a rigid polymer or a metal.

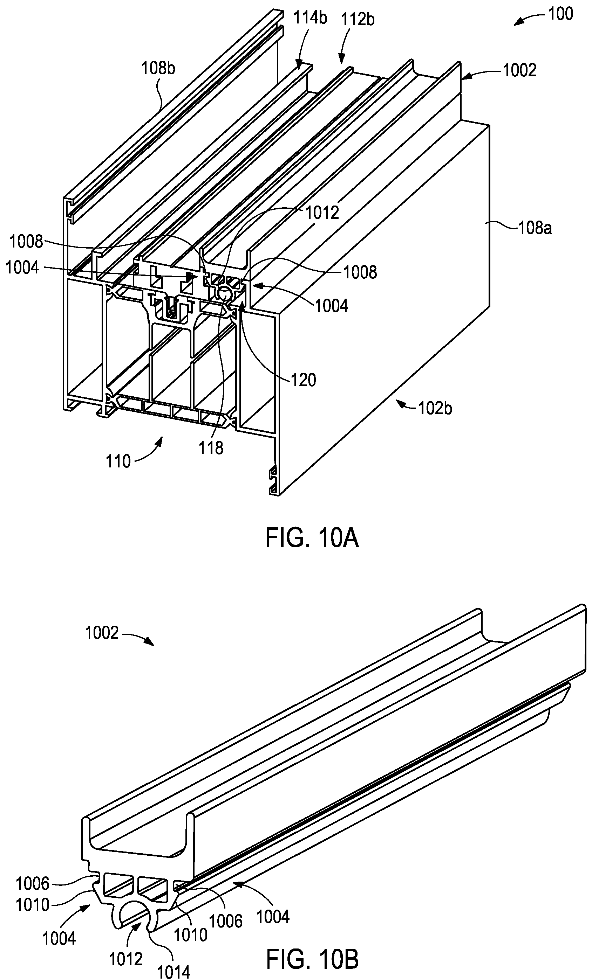

FIG. 10A is a cross-sectional view of a portion of the frame profile 100, according to one or more additional embodiments. In the illustrated embodiment, only the horizontal member 102b is shown, but the present discussion is equally applicable to the vertical member 102a, without departing from the scope of the disclosure. As illustrated, the wire 118 is received within the channel 120, which is defined in the outer profile 112b and, more specifically, within the horizontal outer side 114b. In the illustrated embodiment, the channel 120 is defined in a combination of the interior portion 108a of the horizontal member 102b and a frame accessory 116 operatively coupled to the thermal break 110. In some embodiments, as illustrated, the wire 118 may be arranged within the channel 120 using a frame gasket 1002 that may be attached to the outer profile 112b.

Referring to FIG. 10B, with continued reference to illustrated FIG. 10A, the frame gasket 1002 may include one or more retention mechanisms 1004 configured to be received by a corresponding retention mechanism provided within the channel 120. In the illustrated embodiment, the frame gasket 1002 includes two retention mechanisms 1004, provided on opposing lateral sides of the frame gasket 1002. As illustrated, the retention mechanisms 1004 may comprise a slot or a groove 1006 and, as shown in FIG. 10A, the retention mechanism provided within the channel 120 may include and otherwise provide a projection 1008 extending laterally into the channel 120 and sized to be received within the adjacent groove 1006.

To install the frame gasket 1002 in the channel 120, the frame gasket 1002 may be advanced into the channel 1002 until the projections 1008 are received within the grooves 1006. In some embodiments, as illustrated, each retention mechanism 1004 may further include an angled or tapered surface 1010. As the frame gasket 1002 is advanced into the channel 120, the tapered surfaces 1010 may engage the projections 1008, thereby forcing the frame gasket 1002 to collapse laterally inward until the projections 1008 locate and are received within the adjacent grooves 1006, at which point the frame gasket 1002 will spring laterally outward to its natural state.

In some embodiments, as illustrated, the frame gasket 1002 may further include a wire retention passage 1012 sized to receive the wire 118. In some embodiments, as illustrated, the wire retention passage 1012 may exhibit an angular magnitude greater than 180°, thereby defining an opening 1014 that exhibits an angular magnitude less than 180°. This may prove advantageous in helping to retain the wire 118 within the wire retention passage 1012.

Therefore, the disclosed systems and methods are well adapted to attain the ends and advantages mentioned as well as those that are inherent therein. The particular embodiments disclosed above are illustrative only, as the teachings of the present disclosure may be modified and practiced in different but equivalent manners apparent to those skilled in the art having the benefit of the teachings herein. Furthermore, no limitations are intended to the details of construction or design herein shown, other than as described in the claims below. It is therefore evident that the particular illustrative embodiments disclosed above may be altered, combined, or modified and all such variations are considered within the scope of the present disclosure. The systems and methods illustratively disclosed herein may suitably be practiced in the absence of any element that is not specifically disclosed herein and/or any optional element disclosed herein. While compositions and methods are described in terms of "comprising," "containing," or "including" various components or steps, the compositions and methods can also "consist essentially of" or "consist of" the various components and steps. All numbers and ranges disclosed above may vary by some amount. Whenever a numerical range with a lower limit and an upper limit is disclosed, any number and any included range falling within the range is specifically disclosed. In particular, every range of values (of the form, "from about a to about b," or, equivalently, "from approximately a to b," or, equivalently, "from approximately a-b") disclosed herein is to be understood to set forth every number and range encompassed within the broader range of values. Also, the terms in the claims have their plain, ordinary meaning unless otherwise explicitly and clearly defined by the patentee. Moreover, the indefinite articles "a" or "an," as used in the claims, are defined herein to mean one or more than one of the elements that it introduces. If there is any conflict in the usages of a word or term in this specification and one or more patent or other documents that may be incorporated herein by reference, the definitions that are consistent with this specification should be adopted.

As used herein, the phrase "at least one of" preceding a series of items, with the terms "and" or "or" to separate any of the items, modifies the list as a whole, rather than each member of the list (i.e., each item). The phrase "at least one of" allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

Although various example embodiments have been disclosed, a worker of ordinary skill in this art would recognize that certain modifications would come within the scope of this disclosure. For that reason, the following claims should be studied to determine the scope and content of this disclosure.

## Claims

1. A frame profile for a fenestration system, comprising:
a vertical member;
a horizontal member joined to the vertical member at a corner joint;
an outer profile cooperatively defined by the vertical and horizontal members and
configured to accommodate a wire extending along the outer profile and transitioning between the vertical and horizontal members at the corner joint; and
a corner clip mounted to the outer profile at the corner joint and operable to transition the wire between the vertical and horizontal members.

2. The frame profile of claim 1, wherein the corner clip comprises:
an L-shaped body providing a first extension and a second extension extending from the first extension at a joint;
a wire channel defined on an inner surface of each extension and contiguously transitioning between the first and second extensions at the joint,
wherein the wire channel is sized to receive and transition the wire between the vertical and horizontal members.

3. The frame profile of claim 2, wherein the wire channel exhibits a depth greater than a diameter of the wire.

4. The frame profile of claim 2, wherein the corner clip further comprises one or more longitudinal ribs defined on an outer surface of each extension, the frame profile further including a frame gasket operatively coupled to the outer profile and defining one or more longitudinal ribs that align with the one or more longitudinal ribs of the corner clip when the corner clip is mounted to the outer profile.

5. The frame profile of claim 2, wherein the wire channel is defined by a pair of legs extending parallel to each other, and wherein the corner clip is mounted to the outer profile by receiving the pair of legs in a channel defined in the outer profile.

6. The frame profile of claim 5, wherein at least one leg of the pair of legs provides a matable feature operable to mate with a corresponding matable feature provided within the channel.

7. The frame profile of claim 1, wherein the wire is received within a channel defined in the outer profile.

8. The frame profile of claim 7, wherein the outer profile is cooperatively defined by:
a vertical outer side extending between interior and exterior portions of the vertical member; and
a horizontal outer side extending between interior and exterior portions of the horizontal member, and
wherein the channel is defined in the vertical and horizontal outer sides.

9. The frame profile of claim 7, further comprising a frame accessory operatively coupled to the outer profile, wherein the channel is at least partially defined in the frame accessory, or further comprising a frame gasket attached to the outer profile at a gasket profile contiguous with the channel, wherein the frame gasket includes a wire retention passage sized to receive the wire.

10. The frame profile of claim 7, wherein the wire is secured within the channel using a wire clip.

11. The frame profile of claim 10, wherein the wire clip comprises:
a body providing opposing first and second legs that cooperatively define a wire retention passage sized to receive the wire; and
a retention mechanism provided on each leg and matable with a corresponding retention mechanism provided within the channel.

12. The frame profile of claim 11, wherein the wire retention passage exhibits a diameter smaller than a diameter of the wire, and/or wherein the wire clip is made of rubber or a foam rubber, and/or wherein each leg of the wire clip defines a chamfered surface that helps facilitate installation of the wire clip in the channel.

13. The frame profile of claim 10, further comprising a frame gasket attached to the outer profile at a gasket profile contiguous with the channel, wherein the frame gasket contacts or comes into close contact with the wire when received in the gasket profile.

14. A frame profile for a fenestration system, comprising:
a first member extending from a second member at a corner joint;
an outer profile cooperatively defined by the first and second members and configured to accommodate a wire extending along the outer profile and transitioning between the first and second members at the corner joint, the wire being received within a channel defined in the outer profile;
a corner clip mounted to the outer profile at the corner joint and operable to transition the wire between the first and second members; and
one or more wire clips arranged within the channel, wherein the wire is received within the one or more wire clips to secure the wire within the channel.

15. The frame profile of claim 14,
wherein the corner clip comprises:
an L-shaped body providing a first extension and a second extension extending from the first extension at a joint; and
a wire channel defined on an inner surface of each extension and contiguously transitioning between the first and second extensions at the joint,
wherein the wire channel is sized to receive and transition the wire between the first and second members,
or
wherein the wire clip comprises:
a body providing opposing first and second legs that cooperatively define a wire retention passage sized to receive the wire; and
a retention mechanism provided on each leg and matable with a corresponding retention mechanism provided within the channel,
and/or wherein the frame profile further comprises a frame gasket attached to the outer profile at a gasket profile contiguous with the channel, wherein the frame gasket contacts or comes into close contact with the wire when received in the gasket profile.
